# EUROPEAN PATENT APPLICATION

(11) **EP 2 811 364 A1**
(43) Date of publication of application: **10.12.2014**
(21) Application number: 13174585.3
(22) Date of filing: 01.07.2013
(51) Int. Cl.: G06F 1/16, H01M 2/10, H01M 2/20, H04M 1/02

(54) **Auxiliary battery device for electronic device**

(30) Priority: 04.06.2013 US 201313909125
(71) Applicant: Kim, Justin Chiwon, Great Neck, NY 11020 (US)
(72) Inventor: Kim, Justin Chiwon, Great Neck, NY 11020 (US)
(74) Representative: Birchenough, Lewis

(57) **Abstract**

An auxiliary battery device for an electronic device includes: one or more auxiliary battery bodies; first and second coupling units provided on front and rear surfaces of the bodies to couple or separate the auxiliary battery bodies according to rotation of the auxiliary battery bodies; and one or more connection terminal units provided in the coupling units to electrically connect the auxiliary battery bodies when the auxiliary battery bodies are coupled to each other.

## Description

### BACKGROUND OF THE INVENTION

### 1. Field of the Invention

The present invention relates generally to an auxiliary battery device for an electronic device, and more particularly, to an auxiliary battery device for an electronic device which is adapted to conveniently increase a capacity of a battery.

### 2. Description of the Related Art

In recent years, various electronic devices are provided to users. In particular, portable terminal devices, such as portable terminals, MP3 players, Portable Multimedia Players (PMPs), and electronic books, by which user can access various contents while carrying them are widely used.

That is, the main purpose of the portable electronic devices is voice communication or transmission and reception of short messages, but various additional functions (photographing of pictures or videos, various utilities, games, and the like) are recently provided due to development of smart phones. The currently distributed smart phones can realize various functions, including checking of mail and execution of the Internet, through wireless communication networks.

A high capacity battery pack is necessary to perform various functions without any problems in this way. That is, a conventional portable electronic device receives electric power from a basic battery pack, and if the basic battery pack is discharged, it is separated and a spare battery is mounted to be used.

However, according to the portable electronic device, if electric power of the basic battery pack and the spare battery pack is exhausted, they should be recharged or another spare battery pack should be mounted to the portable electronic device again. Further, there often occur inconveniences in the process of executing various functions due to the limited capacity of the battery.

That is, although much electric power is required when a plurality of functions such as the Internet or games are simultaneously executed (multitasking), the electric power of the portable electronic device generally cannot be maintained for more than 24 hours due to the limited capacity of the battery.

External auxiliary batteries are widely used to increase capacities of batteries of portable electronic devices, but a separate connection cable is necessary to electrically connect the external auxiliary battery to the portable electronic device and the connection cable should be always carried.

Thus, a device for conveniently increasing a capacity of a battery when a user uses various functions through a portable electronic device and fixing a connection cable for electrically connecting an external auxiliary battery and the portable electronic device while including the connection cable therein is required.

### SUMMARY OF THE INVENTION

Accordingly, an aspect of the present invention is to provide an auxiliary battery device for an electronic device which couples or separates one or more auxiliary battery bodies and electrically connects the auxiliary battery bodies according to rotation of the auxiliary battery bodies, conveniently increasing a capacity of the electronic device and enhancing an in-use state of the electronic device.

Another aspect of the present invention is to provide an auxiliary battery device for an electronic device which includes first and second connector units for electrically connecting an external device to at least one auxiliary battery body and supplying electric power to the external device, enhancing an in-use state of the product while a user does not carry a separate connector.

In accordance with another aspect of the present invention, there is provided an auxiliary battery device for an electronic device, including: one or more auxiliary battery bodies; and a coupling unit that couples or separates the auxiliary battery bodies and electrically connects the auxiliary battery bodies according to rotation of the auxiliary battery bodies.

In accordance with another aspect of the present invention, there is provided an auxiliary battery device for an electronic device, including: one or more auxiliary battery bodies; first and second coupling units provided on front and rear surfaces of the bodies to couple or separate the auxiliary battery bodies according to rotation of the auxiliary battery bodies; and one or more connection terminal units provided in the coupling units to electrically connect the auxiliary battery bodies when the auxiliary battery bodies are coupled to each other.

### BRIEF DESCRIPTION OF THE DRAWINGS

The above and other aspects, features, and advantages of the present invention will be more apparent from the following detailed description taken in conjunction with the accompanying drawings, in which:
FIG. 1 is an exploded perspective view showing a configuration of an auxiliary battery device for an electronic device according to an embodiment of the present invention;
FIG. 2 is a partially cutaway exploded perspective view showing the configuration of the auxiliary battery device for an electronic device according to the embodiment of the present invention;
FIG. 3 is a partially cutaway perspective view showing a coupled state of the auxiliary battery device for an electronic device according to the embodiment of the present invention;
FIG. 4 is a partially cutaway perspective view showing an operation of the auxiliary battery device for an electronic device according to the embodiment of the present invention;
FIG. 5A is a partially cutaway perspective view showing an operational state of the auxiliary battery device for an electronic device according to the embodiment of the present invention;
FIG. 5B is an enlarged view of part A of FIG. 5A;
FIG. 6 is a partially cutaway perspective view showing a stopper boss of a stopper unit of the configuration of the auxiliary battery device for an electronic device according to the embodiment of the present invention;
FIG. 7 is a partially cutaway perspective view showing a stopper recess of the stopper unit of the configuration of the auxiliary battery device for an electronic device according to the embodiment of the present invention;
FIG. 8 is a side sectional view showing a connection terminal unit of the configuration of the auxiliary battery device for an electronic device according to the embodiment of the present invention;
FIG. 9 is a perspective view showing first and second connector units of the configuration of the auxiliary battery device for an electronic device according to the embodiment of the present invention;
FIG. 10 is a perspective view showing a state in which the first and second connector units are mounted to the auxiliary battery device for an electronic device according to the embodiment of the present invention;
FIG. 11 is a perspective view showing cables of the first and second connector units of the configuration of the auxiliary battery device for an electronic device according to the embodiment of the present invention;
FIG. 12 is an exploded perspective view showing a first protection cover of the configuration of the auxiliary battery device for an electronic device according to the embodiment of the present invention;
FIG. 13 is an exploded perspective view showing a second protection cover of the configuration of the auxiliary battery device for an electronic device according to the embodiment of the present invention;
FIG. 14 is a perspective view showing a state in which the first protection cover of the configuration of the auxiliary battery device for an electronic device according to the embodiment of the present invention is coupled to a first coupling unit; and
FIG. 15 is a perspective view showing a state in which the second protection cover of the configuration of the auxiliary battery device for an electronic device according to the embodiment of the present invention is coupled to a second coupling unit.

### DETAILED DESCRIPTION OF EMBODIMENTS OF THE PRESENT INVENTION

Hereinafter, exemplary embodiments of the present invention will be described below with reference to the accompanying drawings to help general understanding of the present invention defined by the claims and their equivalents. The embodiments of the present invention contain various specific details to help understanding of the present invention, but will be regarded simply as exemplary. Further, in the description of the present invention, a configuration of the present invention will not be described in detail when it may make the essence of the present invention rather unclear.

Hereinafter, an auxiliary battery device for an electronic device according to an embodiment of the present invention will be described with reference to the accompanying drawings. Here, applications of the electronic device according to the embodiment of the present invention may include all information communication devices, multimedia devices, and application devices thereof such as Portable Multimedia Players (PMPs), MP3 players, navigation devices, gaming devices, notebooks, net books, advertising panels, TVs, digital broadcasting players, Personal Digital Assistants (PDAs), and smart phones, including all mobile communication terminals operated based on communication protocols corresponding to various communication systems.

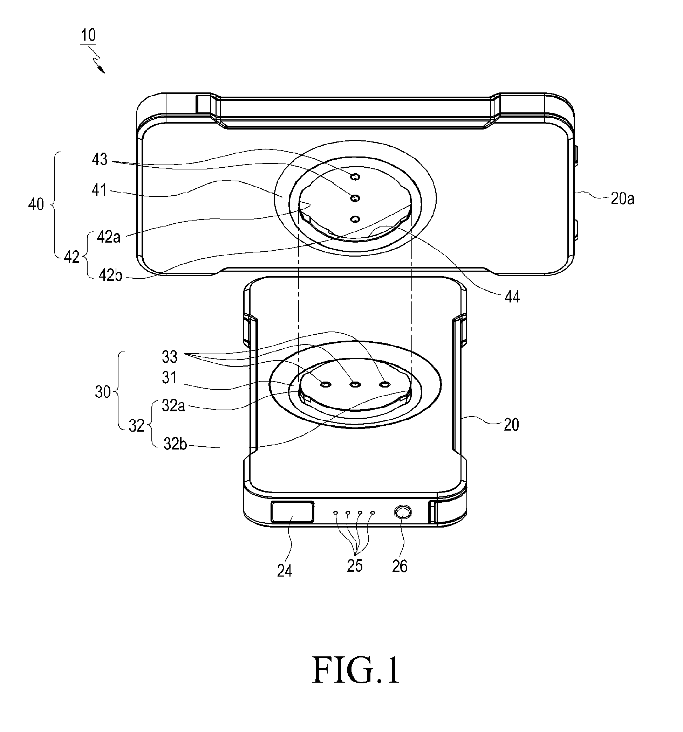

A configuration of the auxiliary battery device 10 for an electronic device according to the embodiment of the present invention will be described in more detail with reference to FIGS. 1 to 3.

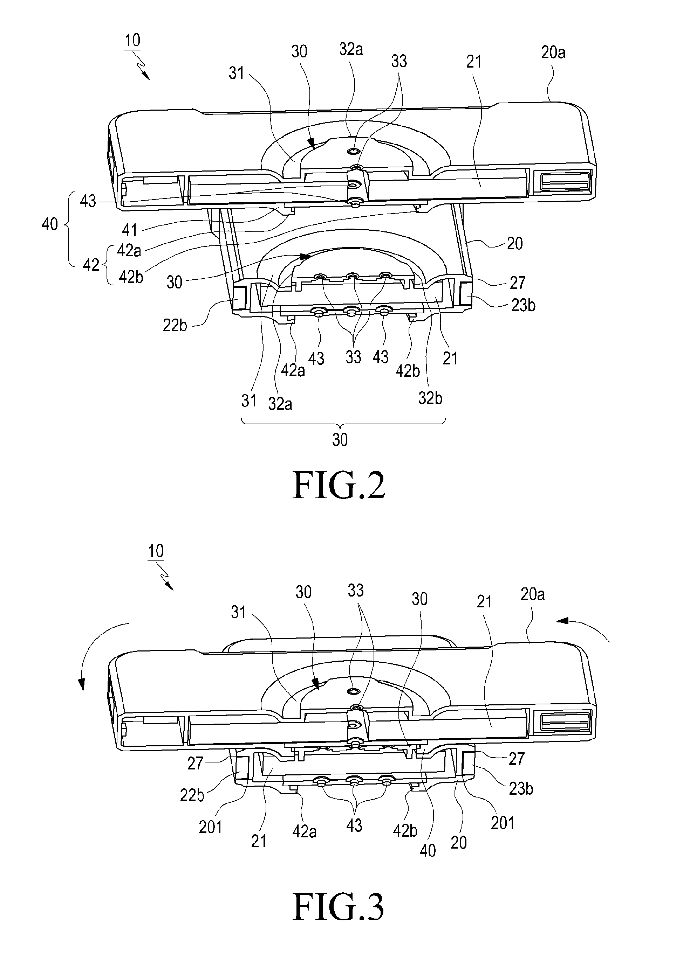

FIG. 1 is an exploded perspective view showing a configuration of an auxiliary battery device for an electronic device according to an embodiment of the present invention. FIG. 2 is a partially cutaway exploded perspective view showing the configuration of the auxiliary battery device for an electronic device according to the embodiment of the present invention. FIG. 3 is a partially cutaway perspective view showing a coupled state of the auxiliary battery device for an electronic device according to the embodiment of the present invention.

Referring to FIGS. 1 to 3, the auxiliary battery device 10 includes at least one auxiliary battery body 20, first and second coupling units 30 and 40, and at least one connection terminal unit. The auxiliary battery body 20 has a battery cell 21 therein to supply electric power to an electronic device (not shown). The first coupling unit 30 is provided on a front surface of the auxiliary battery body 20 to be coupled to or separated from the second coupling unit 40 provided in the auxiliary battery body 20, which will be described below, according to rotation of the auxiliary battery body 20. The second coupling unit 40 is provided on a rear surface of the auxiliary battery body 20 to be coupled to or separated from the first coupling unit 30 according to rotation of the auxiliary battery body 20. The connection terminal unit includes first and second connection terminal units 33 and 44, and the first connection terminal unit 33 is provided in the first coupling unit 30 such that the second coupling unit 40 is electrically connected to the first coupling unit 30 when the second coupling unit 40 is coupled to the first coupling unit 30. The second connection terminal unit 43 is provided in the second coupling unit 40 such that the second coupling unit 40 is electrically connected to the first coupling unit 30 when being coupled to the first coupling unit 30.

In this way, since the first and second coupling units 30 and 40 are provided on front and rear surfaces of the auxiliary battery body 20 to be coupled to or separated from each other so as to be electrically connected to each other according to rotation of the auxiliary battery body 20, a capacity of the battery can be increased by coupling a plurality of auxiliary batteries. In this state, electric power can be supplied to the electronic device by using first and second connector units provided in the auxiliary battery body and an in-use time of the electronic device can be increased as well.

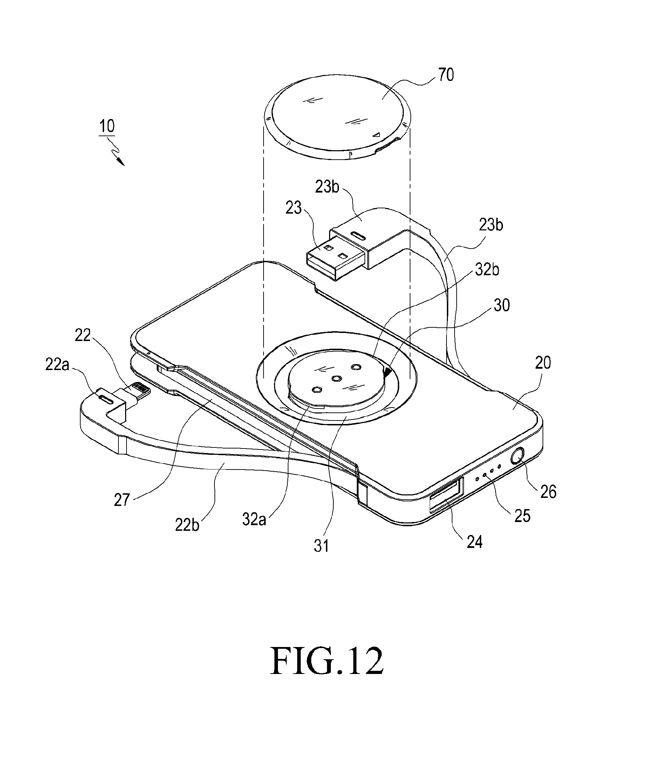

As shown in FIG. 12, the auxiliary battery body 20 includes a battery cell 21 provided in the body, first and second connector units 22 and 23, a USB port 24, a light emitting device 25, and a power switch 26. The first and second connector units 22 and 23 are provided on opposite side surfaces of the auxiliary battery body 20 to be electrically connected to an electronic device so as to supply electric power of the auxiliary battery body 20 to the electronic device. The USB port 24 is provided on a lower surface of the auxiliary battery body 20 to charge the electronic device (not shown). The light emitting device 25 is provided on the lower surface of the auxiliary battery body 20 to display a capacity of the auxiliary battery body 20.

Here, the light emitting device 25 may include an LED. Different types of light emitting devices 25 capable of displaying a capacity of a battery as well as an LED may be applied as the light emitting device 25. For example, the light emitting device 25 may include a small-sized bulb or a small-sized lamp. The power switch 26 is provided on the lower surface of the auxiliary battery body 20 to operate the auxiliary battery body 20.

Also, the light emitting device 25 may be formed in "O" shaped LED. The "O" shaped LED entirely or partially emits according to the shape, thereby displaying a charged state and a used state of the battery.

Connector introducing/extracting units 27 are provided in the auxiliary battery body 20 to introduce and extract the first and second connector units 22 and 23. The connector introducing/extracting units 27 correspond to introduction/extraction grooves, and the introduction/extraction grooves may be coupled and fixed to or separated from the first and second connector units 22 and 23 according to an in-use state of the auxiliary battery body 20. Although it is exemplified in the embodiment of the present invention that the connector introducing/extracting units 27 correspond to the introduction/extraction grooves, the present invention is not limited thereto. That is, any configuration capable of introducing and extracting the first and second connector units 22 and 23 may be applied as a modified embodiment of the present invention.

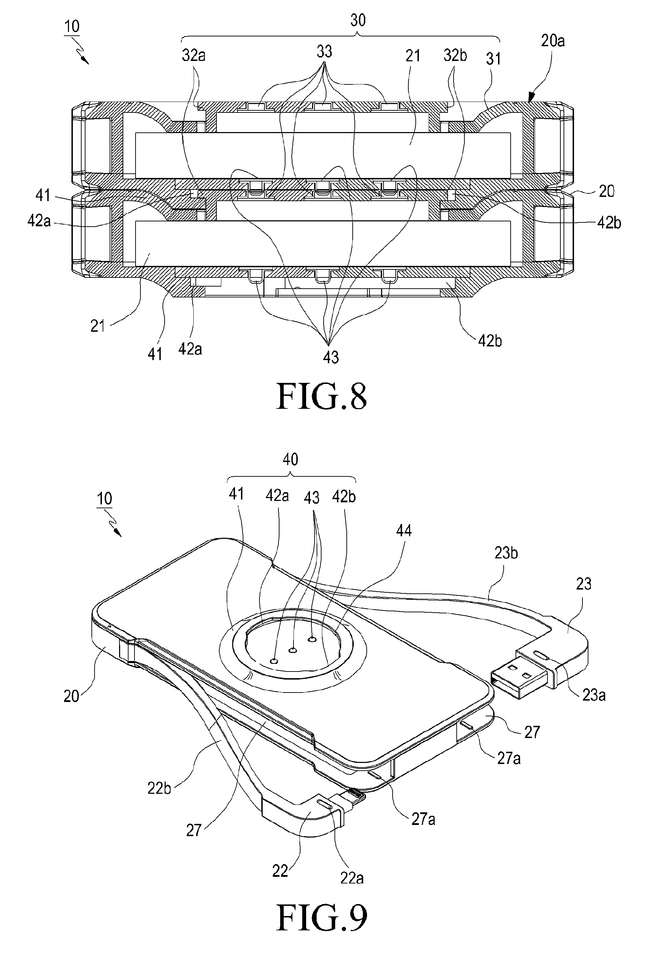

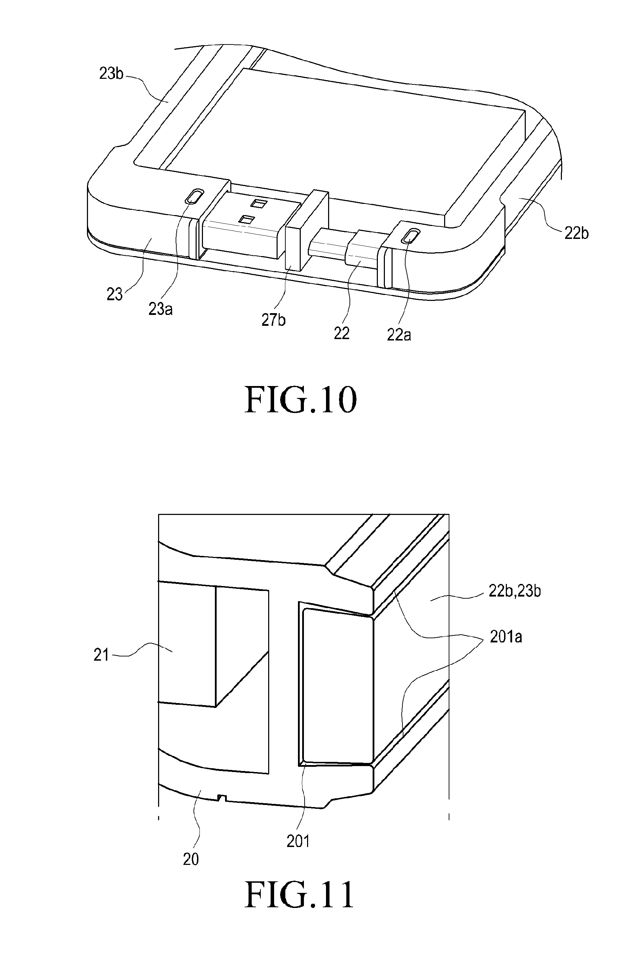

As shown in FIG. 9 and 10, connector attaching/detaching units 27a are provided in the connector introducing/extracting units 27 to be attached and fixed to recesses 22a and 23a formed in the first and second connector units 22 and 23. Permanent magnets 27b are provided in the connector introducing/extracting units 27 to attach heads of the first connector units 22 and 23 by using a magnetic force. That is, the permanent magnets 27b are provided between the first and second connector units 22 and 23 and the first and second connector units 22 and 23 are formed of a metallic material to pull the first and second connector units 22 and 23 by the magnetic forces of the permanent magnets 27b and firmly fix the first and second connector units 22 and 23 to the connector introducing/extracting units 27 of the body 20.

Here, although the permanent magnets 27b are exemplified in the embodiment of the present invention, the present invention is not limited thereto. That is, any configuration capable of fixing the first and second connectors 22 and 23 to the connector introducing/extracting unit 27 of the body 20 can be applied as a modified embodiment of the present invention.

Cables 22b and 23b are provided in the first and second connector units 22 and 23 to introduce and extract the connector units 22 and 23 into and from the connector introducing/extracting units 27 of the body 20. That is, the cables 22b and 23b electrically connect the first connector units 22 and 23 and the body 20 and are formed of a flexible material.

As shown in FIGS. 11, the cables 22b and 23b are introduced into and extracted from cable grooves 201 formed on opposite side surfaces of the body 20. That is, the cable grooves 201 are formed such that an entrance 201a thereof is narrow and becomes wider inward so that the cables 22b and 23b can be pushed into and assembled in the cable grooves 201 to be fixed. Since the cables 22b and 23b are formed of a flexible material, they are inserted into and fixed to the entrance 201a of the cable grooves 201 through press-fitting. Thus, the cables 22b and 23b are prevented from being separated from the cable grooves 201 having the narrow entrances 201a after being inserted into the cable grooves 201.

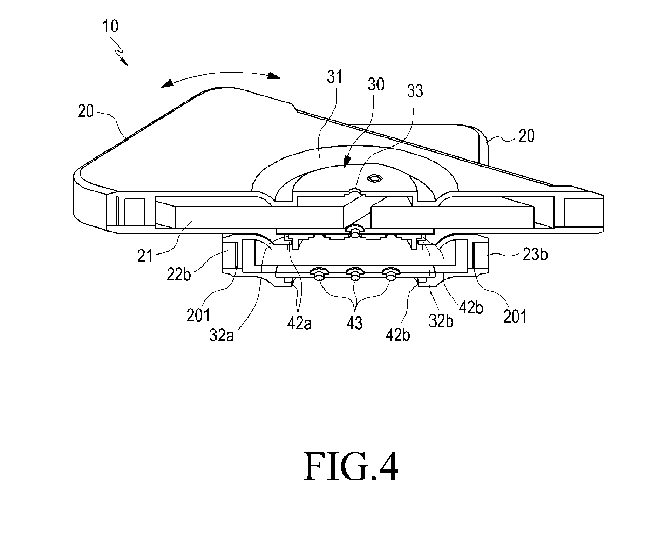

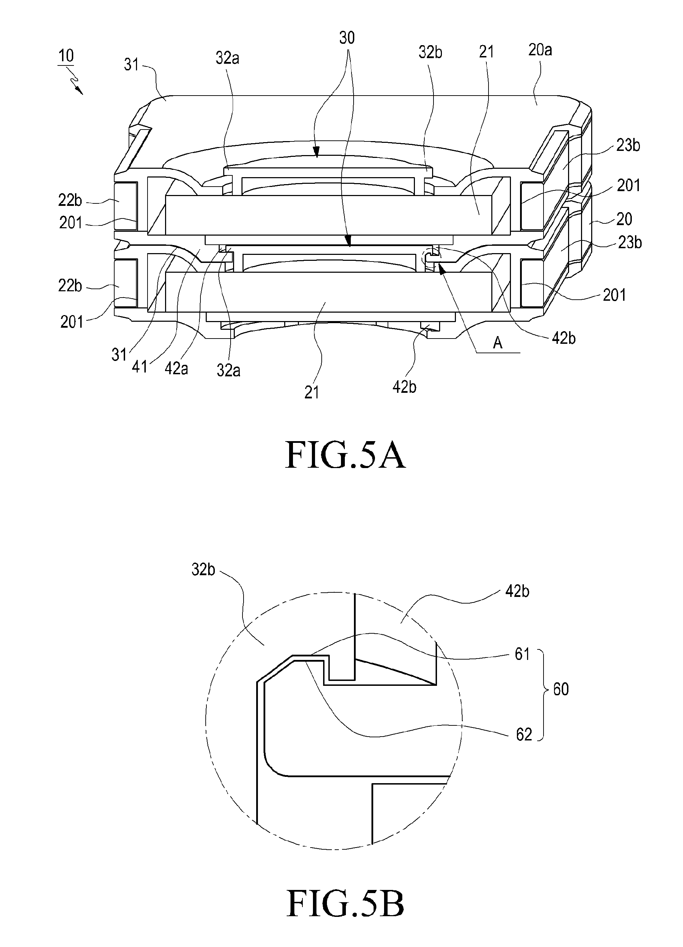

Hereinafter, configurations of the first and second coupling units 30 and 40 will be described in more detail. First, FIG. 4 is a partially cutaway perspective view showing a rotation of the auxiliary battery device for an electronic device according to the embodiment of the present invention. FIG. 5A is a partially cutaway perspective view showing a state in which the auxiliary battery device for an electronic device according to the embodiment of the present invention is coupled to another auxiliary battery device. FIG. 5B is an enlarged view of part A of FIG. 5A.

As shown in FIGS. 4, 5A, and 5B, the first coupling unit 30 includes a coupling recess 31, a locker 32, and a first connection terminal unit 33. The coupling recess 31 is formed on a front surface of the auxiliary battery body 20 to have the locker 32, which will be described below, therein. The locker 32 protrudes by a predetermined height in the coupling recess 31 to be coupled to or separated from a locker recess 42 of the second coupling unit 40, which will be described below. The first connection terminal unit 33 is provided in the locker 32 to be electrically connected to the second connection terminal unit of the second coupling unit 40, which will be described below, when the first coupling unit 30 is coupled to the second coupling unit 40. The second coupling unit 40 includes a coupling rotation part 41, a locker recess 42, and a second connection terminal unit 43. The coupling rotation part 41 protrudes from a rear surface of the auxiliary battery body 20 to be rotated at the same time when it is coupled to the coupling recess 31 of the first coupling unit 30. The locker recess 42 is recessed inward by a predetermined depth to be coupled to the locker 32 of the first coupling unit 30. The second connection terminal unit 43 is provided in the locker recess 42 to be electrically connected to the first connection terminal unit 33 when the first and second coupling units 30 and 40 are coupled to each other.

First and second grooves 42a and 42b are formed at peripheries of the locker groove 42 to be coupled to and separated from first lock bosses 32a formed at outer circumferences of the locker 32, and lock guides 44 are formed at locations adjacent to the first and second grooves 42a and 42b to guide the first lock bosses 32a according to rotation of the auxiliary battery body 20 while the first lock bosses 32a are coupled to the first and second grooves 42a and 42b and to stop and fix or release the first lock bosses 32a.

That is, the first lock bosses 32a coupled to and separated from the first and second grooves 42a and 42b are formed at outer peripheries of the locker 32. Here, the thickness of the first lock bosses 32a is smaller than the thickness of second lock bosses 32b. More specifically, the thickness of the first lock bosses 32a is 1.0 mm, and the thickness of the second lock bosses 32b is 1.3 mm. The thickness of the first grooves 42a coupled to the first lock bosses 32a is 1.1 mm, and the thickness of the second grooves 42b coupled to the second lock bosses 32b is 1.4 mm.

The thickness of the first lock bosses 32a may be more than or less than 1.0 mm, and the thickness of the second lock bosses 32b may be more than or less than 1.3 mm. Likewise, the thickness of the first grooves 42a may be more than or less than 1.1 mm, and the thickness of the second grooves 42b may be more than or less than 1.4 mm.

In this way, the reason why the thickness of the first lock bosses 32a and the thicknesses of the first and second grooves 42a and 42b are different from each other is because although the locker groove 42 of the second coupling unit 40 formed in another body 20a is coupled to the locker 32 of the first coupling unit 30 formed in the body 20 and then the body 20 is rotated by 90 degrees counterclockwise to accurately couple the body 20 to the other body 20a, when the body 20 is rotated in a wrong direction, that is, clockwise, the body 20 cannot be accurately coupled to the other body 20a. Thus, the body 20 is prevented from being inaccurately coupled to the other body 20a. That is, an outer appearance of the body 20 can be accurately assembled with an outer appearance of the other body 20a. That is, the thickness of the first lock bosses 2a corresponds to the thickness of the first grooves 42a, and the thickness of the second lock bosses 32a corresponds to the thickness of the second grooves 42b. Thus, the first and second lock bosses 32a and 32b can be prevented from being wrongly coupled to the first and second grooves 42a and 42b, and rotation of the body 20 can also be prevented.

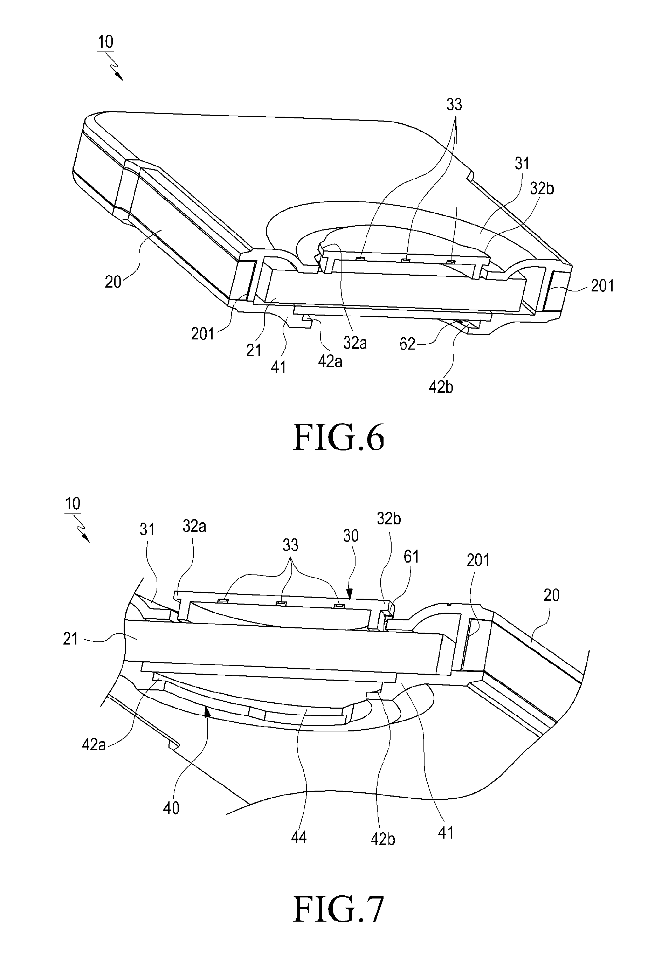

Here, as shown in FIGS. 5A and 5B, stopper units 60 are provided in the first and second coupling units 30 and 40 to restrict rotation of the auxiliary battery body 20. FIG. 6 is a partially cutaway perspective view showing a stopper boss of a stopper unit of the configuration of the auxiliary battery device for an electronic device according to the embodiment of the present invention. FIG. 7 is a partially cutaway perspective view showing a stopper recess of the stopper unit of the configuration of the auxiliary battery device for an electronic device according to the embodiment of the present invention.

As shown in FIGS. 6 and 7, the stopper unit 60 includes a stopper recess 61 and a stopper boss 62. The stopper recess 61 formed in the second coupling unit 40, which will be described below, is formed in the first coupling unit 30. The stopper boss 62 is formed in the second coupling unit 40 to be attached to and detached from the stopper recess 61 so as to restrict rotation of the body 20.

That is, as shown in FIGS. 5A and 5B, when the second coupling unit 40 of the other body 20a is coupled to the first coupling unit 30 of the body 20 and the other body 20a is rotated by 90 degrees counterclockwise, the stopper unit 60 accurately assembles the body 20 and the other body 20a to restrict rotation of the other body 20a. Then, the stopper bosses 62 provide a click feeling when the stopper bosses 62 are attached to and detached from the stopper recesses 61 to inform the user of an accurate rotation location of the other body 20a.

As shown in FIGS. 12 to 15, first and second protection covers 70 and 80 are provided in the first and second coupling units 30 and 40 to protect the first and second coupling units 30 and 40.

Hereinafter, an operation of the auxiliary battery device 10 for an electronic device according to the embodiment of the present invention will be described in detail.

First, as shown in FIGS. 1 to 3, an external charging connection terminal (not shown) is inserted into the USB port 24 provided in the auxiliary battery body 20 to be electrically connected to the auxiliary battery body 20. In this state, the auxiliary battery body 20 starts to be charged by pressing the power switch 26 provided in the auxiliary battery body 20. Then, the battery cell 20 provided in the auxiliary battery body 20 receives charging electric power through the external charging connection terminal (not shown) to be charged. The light emitting device 25 provided in the auxiliary battery body 20 displays a charged state of the battery cell 21, and all the light emitting devices 25 emit light if the charging of the battery cell 21 is completed. In this way, a charging capacity of the auxiliary battery body 20 can be recognized by the displaying of the light emitting device 25. The other battery body 20a is charged through the above-mentioned operation.

The completely charged auxiliary battery bodies 20 and 20a are moved while being carried by the user.

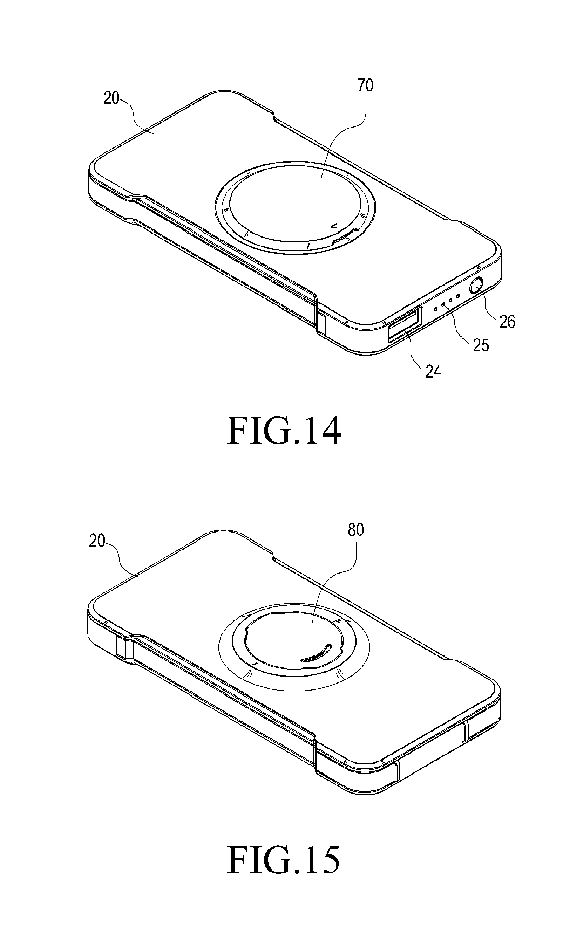

Then, as shown in FIGS. 14 and 15, the first and second protection covers 70 and 80 are coupled to the first and second coupling units 30 and 40 provided on the front and rear surfaces of the auxiliary battery body 20.

When the charged electric power of the battery pack (not shown) provided in the electronic device (not shown) is completely exhausted, the user separates the first and second connector units 22 and 23 provided at opposite sides of the auxiliary battery body 20 from the connector introducing/extracting units 27 of the auxiliary battery body 20 and the separated first and second connector units 22 and 23 are connected to the electronic device to supply electric power.

Then, as shown in FIG. 9, since the connector attaching/detaching units 27a are provided in the connector introducing/extracting units 27 to be attached and fixed to the recesses 22a and 23a formed in the first and second connector units 22 and 23, the recesses 22a and 23a of the first and second connector units 22 and 23 are separated from the connector attaching/detaching units 27a if the first and second connector units 22 and 23 are pulled to be separated from the connector introducing/extracting units 27.

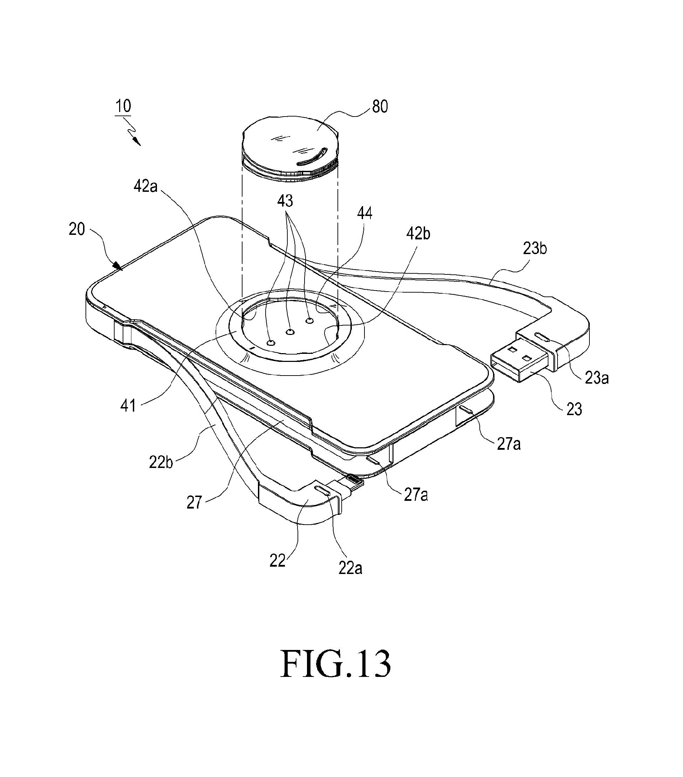

Here, as shown in FIGS. 12 and 13, since the auxiliary battery body 20 and the other auxiliary battery body 20a should be electrically connected to each other if the user desires to increase a capacity of the battery, the first and second protection covers 70 and 80 coupled to the first and second coupling units 30 and 30a of the auxiliary battery bodies 20 and 20a are separated first.

In this state, the second coupling unit 40 of the other auxiliary battery body 20a is coupled to the first coupling unit 30 of the auxiliary battery body 20.

Since the locker recess 42 recessed by a predetermined depth is formed in the second coupling unit 40 of the other auxiliary battery body 20a, the locker 32 of the first coupling unit 30 is coupled to the locker recess 42.

Then, the first and second grooves 42a and 42b of the locker groove 42 are accurately coupled to the first lock bosses 32a of the locker 32. That is, the thickness of the first grooves 42a is formed to correspond to the thickness of the first lock bosses 32a, and the thickness of the second grooves 42b is formed to correspond to the thickness of the second lock bosses 32b. A detailed description thereof has been mentioned above, and will be omitted.

Then, the auxiliary battery body 20 and the other auxiliary battery body 20a are disposed in a cross form.

In this state, as shown in FIG. 8, if the other auxiliary battery body 20a is rotated counterclockwise, the first and second grooves 42a and 42b are rotated together and the lock guides 44 formed in the first and second grooves 42a and 42b are rotated together at the same time, and the lock guides 44 are supported by the first lock bosses 32a and are rotated while being coupled at the same time. The second connection terminal unit 43 provided in the other auxiliary battery body 20a is moved together, and the second connection terminal unit 43 is rotated and is electrically connected to the first connection terminal unit 33 at the same time. Then, the second coupling unit 40 of the other auxiliary battery body 20a is rotated and the stopper boss 62 formed in the second coupling unit 40 is rotated together. The rotated stopper boss 62 is inserted into the stopper recess 61 formed in the first coupling unit 30 and provides a click feeling, and accordingly, rotation of the other auxiliary battery body 20a is restricted and the auxiliary battery bodies 20 and 20a are assembled to face each other in an I form.

When the capacity of the battery is further increased while the auxiliary battery body 20 and the other auxiliary battery body 20a are electrically connected to each other, an additional auxiliary battery body 20a may be coupled in the above-described way. That is, if the user increases a capacity of the electronic device, one or more than two auxiliary battery bodies 20 may be electrically connected to each other.

That is, the auxiliary battery bodies 20 have an output of 1 Ampere. In this state, if the auxiliary battery bodies 20 are electrically connected to each other, a power management controller (not shown) of a PCB circuit (not shown) provided in the auxiliary battery body 20 changes the output to 2.1 Ampere. That is, if a plurality of auxiliary battery bodies 20 are connected to each other, an output thereof can be increased accordingly.

In this way, the conventional portable electronic device should be recharged if electric power of the basic battery pack and the spare battery pack are exhausted. That is, when a plurality of functions such as the Internet and games are executed at the same time (multi-tasking), a large amount of electric power is necessary but the electric power cannot be maintained for more than 24 hours due to the limited capacity of the battery.

Thus, according to the embodiment of the present invention, since the auxiliary battery body 20 can be electrically connected to or separated from the other auxiliary battery body 20a according to rotation of the auxiliary battery body 20, a capacity of the battery of the electronic device can be conveniently increased according to an in-use state of the electronic device and an in-use state of the electronic device can be improved.

The auxiliary battery device for an electric device of the present invention is not limited to the above-described embodiment and the drawings, but it is apparent to those skilled in the art to which the present invention pertains that the present invention can be variously replaced, changed, and modified without departing from the scope of the present invention.

## Claims

1. An auxiliary battery device for an electronic device, comprising:
one or more auxiliary battery bodies; and
a coupling unit that couples or separates the auxiliary battery bodies and electrically connects the auxiliary battery bodies according to rotation of the auxiliary battery bodies.

2. The auxiliary battery device of claim 1, wherein the coupling unit comprises first and second coupling units provided on front and rear surfaces of the bodies, the first coupling unit is coupled to or separated from a second coupling unit formed on a rear surface of another auxiliary battery body, and the second coupling unit is coupled to or separated from a first coupling unit formed on a front surface of a third auxiliary battery body.

3. An auxiliary battery device for an electronic device, comprising:
one or more auxiliary battery bodies;
first and second coupling units provided on front and rear surfaces of the bodies to couple or separate the auxiliary battery bodies according to rotation of the auxiliary battery bodies; and
one or more connection terminal units provided in the coupling units to electrically connect the auxiliary battery bodies when the auxiliary battery bodies are coupled to each other.

4. The auxiliary battery device of claim 3, wherein each of the auxiliary battery bodies comprises:
a battery cell provided in the auxiliary battery body;
first and second connector units provided on opposite surfaces of the auxiliary battery body to electrically connect the auxiliary battery body to an external device;
a USB port provided in the auxiliary battery body;
a light emitting device provided at a location adjacent to the USB port;
and
a power switch provided at a location adjacent to the light emitting device.

5. The auxiliary battery device of claim 4, wherein each of the auxiliary battery bodies further comprises:
connector introducing/extracting units for introducing and extracting the first and second connector units.

6. The auxiliary battery device of claim 5, wherein connector attaching/detaching units attached and fixed to bosses formed in the first and second connector units are provided in the connector introducing/extracting units.

7. The auxiliary battery device of claim 5, wherein permanent magnets for attaching heads of the first and second connector units by using a magnetic force is provided in the connector introducing/extracting units.

8. The auxiliary battery device of claim 3, wherein cable grooves each of which has a narrow entrance and becomes wider inward are formed on opposite surfaces of the body.

9. The auxiliary battery device of claim 3, wherein the first coupling unit comprises:
a coupling recess formed on a front surface of the auxiliary battery body;
a locker protruding by a predetermined height in the coupling recess; and
a first connection terminal unit provided in the locker.

10. The auxiliary battery device of claim 9, wherein first and second lock bosses are formed at outer peripheries of the locker and the thickness of the first lock boss is smaller than the thickness of the second lock boss.

11. The auxiliary battery device of claim 3, wherein the second coupling unit comprises:
a coupling rotation unit protruding from a rear surface of the auxiliary battery body and rotatably coupled to the coupling recess;
a locker recess recessed by a predetermined depth to be coupled to the locker in the coupling rotation unit; and
a second connection terminal unit providing in the locker recess to be electrically connected to the first connection terminal unit.

12. The auxiliary battery device of claim 11, wherein first and second grooves coupled to or separated from the first and second lock bosses are formed at peripheries of the locker recess, and lock guides are formed at locations adjacent to the first and second grooves to guide the first lock bosses according to rotation of the auxiliary battery body while the first lock bosses are coupled to the first and second grooves and to stop and fix or release the first lock bosses.

13. The auxiliary battery device of claim 3, wherein stopper units for restricting rotation of the auxiliary battery body are provided in the first and second coupling units.

14. The auxiliary battery device of claim 13, wherein the stopper unit comprises:
a stopper recess formed in the first coupling unit; and
a stopper boss formed in the second coupling unit to be attached to or detached from the stopper recess.

15. The auxiliary battery device of claim 3, wherein first and second protection covers coupled to or separated from each other according to an in-use state thereof are provided in the first and second coupling unit.

16. The auxiliary battery device of claim 3, wherein the first coupling unit is coupled to or separated from a second coupling unit formed on a surface of another auxiliary battery body, and the second coupling unit is coupled to or separated from a first coupling unit formed on a front surface of a third auxiliary battery body.
